# EUROPEAN PATENT SPECIFICATION

(11) **EP 4 343 460 B1**
(45) Date of publication and mention of the grant of the patent: **29.07.2026**
(21) Application number: 21945415.4
(22) Date of filing: 15.06.2021
(51) Int. Cl.: G05B 19/042, B60N 2/02, B60R 16/023, B60W 50/035

(54) **CONTROL METHOD, APPARATUS AND SYSTEM FOR VEHICLE-MOUNTED DEVICE, AND VEHICLE**
STEUERUNGSVERFAHREN, -VORRICHTUNG UND -SYSTEM FÜR EINE FAHRZEUGMONTIERTE VORRICHTUNG UND FAHRZEUG
PROCÉDÉ, APPAREIL ET SYSTÈME DE COMMANDE POUR DISPOSITIF EMBARQUÉ, ET VÉHICULE

(43) Date of publication of application: 27.03.2024
(60) Divisional application: 26186193.4
(73) Proprietor: Yinwang Intelligent Technologies Co., Ltd., Shenzhen, Guangdong 518110 (CN)
(72) Inventor: LIU, Nan, Shenzhen, Guangdong 518129 (CN); XIA, Yuan, Shenzhen, Guangdong 518129 (CN); ZHOU, Zheng, Shenzhen, Guangdong 518129 (CN); JIANG, Haiying, Shenzhen, Guangdong 518129 (CN)
(74) Representative: Gill Jennings & Every LLP
(86) International application number: PCT/CN2021/100094
(87) International publication number: WO 2022/261822

(56) References cited:
- CN-A- 106 371 423
- CN-A- 107 315 359
- CN-A- 110 001 549
- CN-A- 110 001 549
- CN-A- 112 519 639
- CN-B- 106 515 456
- US-A1- 2007 076 652
- US-A1- 2017 270 924
- US-A1- 2019 250 610
- US-A1- 2020 070 873

## Description

### TECHNICAL FIELD

The present invention relates to the field of intelligent vehicle technologies, and in particular, to a vehicle-mounted device control method, apparatus, and system, and a vehicle

### BACKGROUND

With development of intelligent, networked and electric vehicles, a control mode of a vehicle-mounted device becomes more diversified. For example, for a vehicle seat, a conventional adjustment mode is to move and adjust the vehicle seat by using a seat adjustment button on a seat base or on a vehicle door. With intelligence of the vehicle-mounted device, the vehicle seat may also be controlled by using an in-vehicle touch control screen, an application (application, APP) on an intelligent terminal device, or the like. In addition, a domain controller on a vehicle receives vehicle sensor data and performs real-time processing, and when identifying a driving risk, the domain controller may send a control instruction (for example, a seat backrest return instruction) to the seat, to reduce the risk.

However, if the foregoing several control modes are performed simultaneously, because a seat control unit (seat control unit, SCU) cannot perform a plurality of operation modes simultaneously, the SCU cannot control seat movement normally. Consequently, overall performance of the vehicle is reduced.

Document US2020/0070873 discloses a vehicle control system including a plurality of driving assistance devices.

Document CN106515456A discloses a high-pressure system integrated control method, apparatus, and pure electric vehicle.

Document US2019/0270924A1 discloses a control device with voice and/or gestural recognition.

### SUMMARY

To resolve the foregoing problem, embodiments of this application provide a vehicle-mounted device control method, apparatus, and system, and a vehicle.

Therefore, embodiments of this application use the following technical solutions:

According to a first aspect, this application provides a vehicle-mounted device control method according to independent claim 1.

In this implementation, hardware cannot work normally because a plurality of control instructions for controlling the same in-vehicle hardware are received in a same time or in a very short time period. To resolve this problem, in this application, each control instruction carries a priority identifier and functional category information, and then, based on the priority identifier and the functional category information, a control instruction is selected as a control instruction for controlling the vehicle-mounted device, to avoid a vehicle functional safety problem that the hardware cannot work normally because a plurality of control instructions are received simultaneously.

In an implementation, the controlling the execution unit based on the priority identifier and/or the functional category information of each control instruction includes: when each control instruction carries the priority identifier information and a quantity of control instructions with a highest priority is 1, controlling the execution unit based on the control instruction with the highest priority.

In this implementation, the priority identifier is identified. If it is detected that there are at least two different levels of the priority identifier, and the quantity of control instructions corresponding to the priority identifier with the highest priority is 1, the control instruction with the highest priority is executed. In this way, a case in which the vehicle-mounted device cannot work normally because a plurality of control instructions are received is avoided.

In an implementation, the controlling the execution unit based on the priority identifier and the functional category information of each control instruction includes: when each control instruction carries the functional category information, controlling the execution unit according to a first preset rule.

In this implementation, the functional category information may indicate an effect, such as safety, comfort, and entertainment of executing a control instruction by the vehicle-mounted device on an entire vehicle or a user, and in particular, on functional safety of the vehicle. The control instruction carries the functional category information, and then the control instruction corresponding to the effect may be determined based on a predetermined effect as the control instruction executed by the vehicle-mounted device, to ensure that the vehicle-mounted device achieves the predetermined effect after the vehicle-mounted device executes the control instruction.

In an implementation, the first preset rule includes: determining a priority of the control instruction based on a vehicle function safety impact category indicated by the functional category information.

In this implementation, a priority of the control instruction may be determined based on a type of the functional category information, such as safety, comfort, and entertainment. Safety is generally the most important or has the highest priority, comfort is the second most important or has the second highest priority, and entertainment is the least important or has the lowest priority. After a plurality of control instructions are received at a same moment or in a very short time period, one control instruction may be selected based on a principle of importance or priority, to ensure driving safety of the vehicle.

In an implementation, the controlling the execution unit based on the priority identifier and the functional category information of each control instruction includes: when each control instruction carries both the priority identifier and the functional category information, controlling the execution unit according to a second preset rule.

In this implementation, if each control instruction carries both the priority identifier and the functional category information, an integrated decision is made on the priority identifier and the functional category information, and one control instruction may be selected from the plurality of control instructions.

In an implementation, the second preset rule includes: determining a to-be-executed control instruction based on a level indicated by the priority identifier and the first preset rule.

In an implementation, when one or more of the at least two control instructions do not carry the functional category information, the determining a priority identifier and/or functional category information of each of the at least two control instructions includes: determining functional category information of the one or more control instructions according to a third preset rule.

In this implementation, if the plurality of received control instructions do not carry the functional category information, comparison may be performed based on a correspondence between each control instruction and functional category information stored in a memory, to determine functional category information of each received control instruction. In this way, when a control instruction does not carry a selection identifier, a selection identifier, that is, functional category information, may be automatically configured for each control instruction, so that at a same moment or in a very short time period, one control instruction may be selected based on the configured selection identifier to control the vehicle-mounted device. In addition, when each control instruction carries only the priority identifier, and there are a plurality of control instructions corresponding to a priority identifier with a highest level, one control instruction may be selected in an integrated decision manner by configuring functional category information for each control instruction.

In an implementation, the determining functional category information of the one or more control instructions according to a third preset rule specifically includes: determining the functional category information of the one or more control instructions based on a preset correspondence between a control instruction and functional category information.

In this implementation, the memory may establish a correspondence between various control instructions and functional category information based on a previous use habit, in a manner preset before factory delivery, or the like, so that when a same control instruction is subsequently received again, corresponding functional category information can be quickly obtained by matching.

According to a second aspect, this application provides a vehicle-mounted device control apparatus according to independent claim 3.

In this implementation, each control instruction carries a priority identifier and functional category information, and then, based on the priority identifier and the functional category information, a control instruction is selected as a control instruction for controlling the vehicle-mounted device, so that a problem in which hardware cannot work normally because a plurality of control instructions are received simultaneously is avoided.

In an implementation, the processing unit is specifically configured to: when each control instruction carries the priority identifier information and a quantity of control instructions with a highest priority is 1, control the execution unit based on the control instruction with the highest priority.

According to a third aspect, this application provides a vehicle-mounted device control system according to independent claim 4.

According to a fourth aspect, this application provides a vehicle-mounted device control system according to independent claim 5.

According to a fifth aspect, this application provides a computing device according to independent claim 7.

According to a sixth aspect, this application provides a vehicle according to independent claim 6.

According to a seventh aspect, this application provides a computer-readable storage medium according to independent claim 8.

### BRIEF DESCRIPTION OF DRAWINGS

The following briefly describes the accompanying drawings that need to be used in the descriptions of embodiments or a conventional technology.
FIG. 1 is a schematic diagram of a structure of a seat according to an embodiment of this application;
FIG. 2 is a schematic diagram of an internal structure of a vehicle according to an embodiment of this application;
FIG. 3 is a schematic flowchart of a vehicle-mounted device control method according to an embodiment of this application;
FIG. 4 is a schematic flowchart of a vehicle-mounted device control method according to an embodiment of this application;
FIG. 5 is a schematic flowchart of a vehicle-mounted device control method according to an embodiment of this application;
FIG. 6 is a schematic diagram of a scenario of control instruction transmission in a vehicle according to an embodiment of this application;
FIG. 7 is a schematic flowchart of a vehicle-mounted device control method according to an embodiment of this application;
FIG. 8 is a schematic diagram of a scenario of control instruction transmission in a vehicle according to an embodiment of this application;
FIG. 9 is a schematic diagram of an architecture of a vehicle-mounted device control system according to an embodiment of this application;
FIG. 10 is a schematic diagram of an architecture of a vehicle-mounted device control apparatus according to an embodiment of this application; and
FIG. 11 is a schematic diagram of an architecture of a computing device according to an embodiment of this application.

### DESCRIPTION OF EMBODIMENTS

The following describes the technical solutions in embodiments of this application with reference to the accompanying drawings in embodiments of this application.

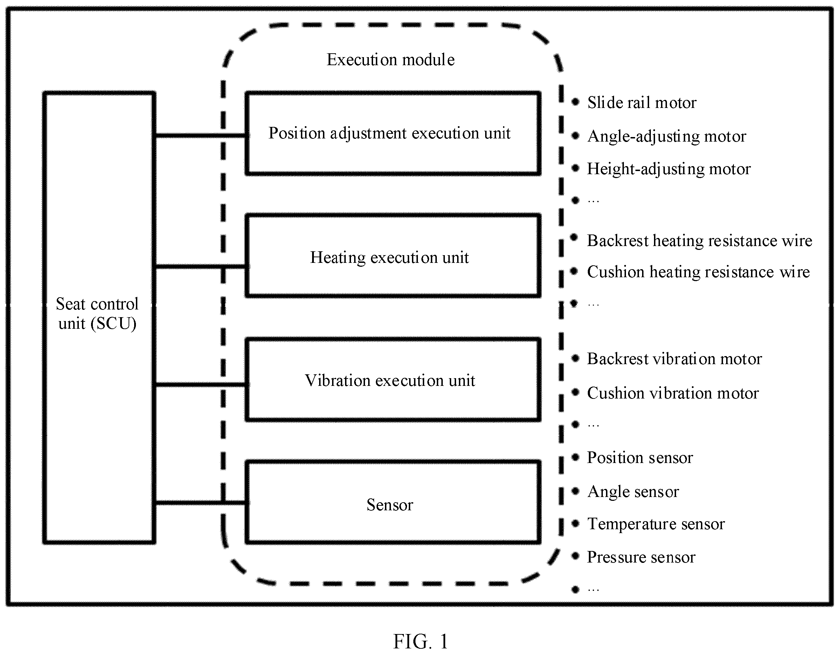

For example, a seat structure shown in FIG. 1 includes a seat control unit SCU and an execution module. The execution module may include hardware such as a position adjustment execution unit, a heating execution unit, a vibration execution unit, and a sensor. For the entire seat, the SCU may independently process a control instruction, and then send the control instruction to each corresponding hardware in the execution module, to adjust a status of the seat. For example, a motor in the position adjustment execution unit raises a seat height, a backrest heating resistance wire in the heating execution unit performs heating, and a sensor detects a temperature. The control instruction received by the SCU may be obtained from control ends such as a control button on a vehicle-mounted central control screen, a control button on a human-computer interaction interface on a mobile phone application, and a physical button on the seat.

In a process of assembling and producing an entire vehicle, an automobile manufacturer connects an electronic control unit (electronic control unit, ECU) such as an SCU and a door control unit (door control unit, DCU) provided by different component suppliers to a control apparatus with a higher control level and a more powerful calculation function of the vehicle for integrated management of various components in the vehicle. The control apparatus may be a domain controller, and performs comprehensive management on ECUs in all components in the entire vehicle. The control apparatus may also be a higher-level ECU, and performs comprehensive management on ECUs in several or more components. The control apparatus may even be a cloud server. This is not limited in this application. The following uses only a domain controller as an example to describe the technical solutions of this application.

A component from another supplier may be referred to as a vehicle-mounted device relative to a domain controller. In the "domain controller + vehicle-mounted device" technical solution provided in embodiments of this application, the domain controller may be a vehicle domain controller (vehicle domain controller, VDC), a cockpit domain controller (cockpit domain controller, CDC), a mobile data center (mobile data center, MDC), or the like. A type of the domain controller is not limited in embodiments of this application.

The domain controller is generally an electronic control apparatus with a more powerful computing function. An automotive electronic system divides the domain controller into different functional blocks based on an executed function. Each functional block may independently control the vehicle-mounted device, or two or more functional blocks may jointly control the vehicle-mounted device. In embodiments of this application, a vehicle-mounted device supplier or a component supplier may place an application APP in each functional block in the domain controller to run, and implement more functional applications by using advantages of high computing power and multi-data interaction of the domain controller. If the vehicle-mounted device supplier needs to upgrade the application APP, an APP version in the domain controller may be remotely upgraded by using over-the-air (over-the-air, OTA) software upgrade, to extend an existing function or add a new functional application.

To resolve a case in which a piece of hardware in the vehicle-mounted device cannot normally execute, does not work, or the like when the hardware simultaneously receives control instructions sent by control ends such as a domain controller and a physical button, this application provides a solution. That is, in a same moment or a specified time period, an operation such as adding a priority identifier to a control instruction sent to an ECU in a peripheral device or performing function classification on the control instruction is performed. After receiving the control instruction that carries the priority identifier and/or functional category information, the ECU of the peripheral device determines, according to a preset rule and based on the level of the priority identifier and the functional category information, a to-be-executed control instruction, and controls the vehicle-mounted device, to avoid a case in which a piece of hardware in the vehicle-mounted device cannot normally execute, does not work, or the like when the hardware receives a plurality of control instructions.

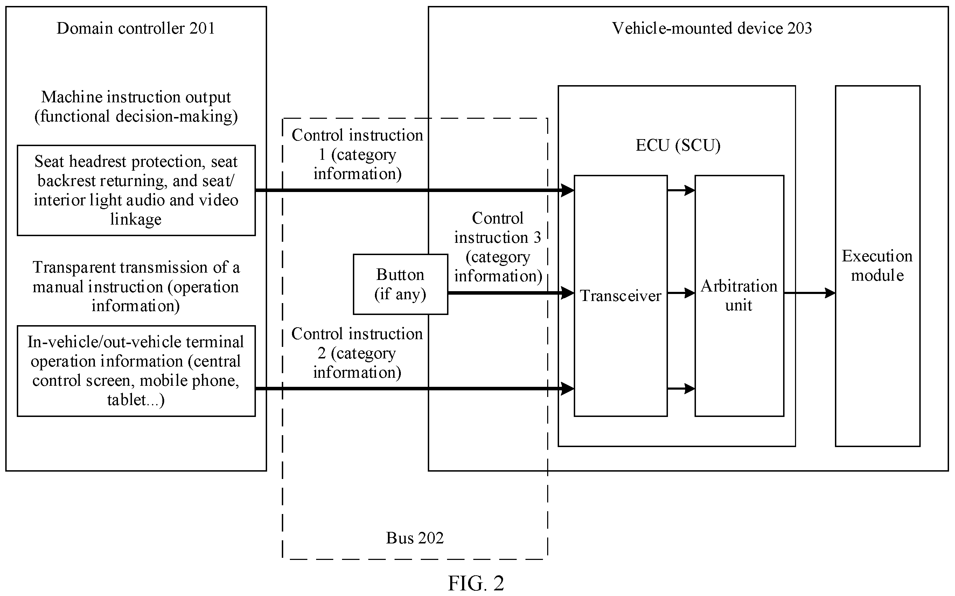

FIG. 2 is a schematic diagram of an internal structure of a vehicle according to an embodiment of this application. As shown in FIG. 2, the vehicle includes a domain controller 201, a bus 202, and a vehicle-mounted device 203. The domain controller 201 is connected to the vehicle-mounted device 203 through the bus 202.

The domain controller 201 is configured to generate a control instruction, and send the control instruction to the vehicle-mounted device 203 through the bus 202. A manner of triggering the domain controller 201 to generate the control instruction is not limited. For example, the domain controller 201 makes a decision to generate the control instruction based on a status of the vehicle, the domain controller 201 receives an input operation of a user and performs processing to obtain the control instruction, or the domain controller 201 directly receives the control instruction from another device.

The bus 202 refers to a line connected between the domain controller 201 and the vehicle-mounted device 203 for data transmission, and a line connected between a button and an ECU in the vehicle-mounted device 203 for data transmission. The bus 202 may be a wired communication line such as a controller area network (controller area network, CAN) bus, a local interconnect network (local interconnect network, LIN) bus, a media oriented system transport (media oriented system transport, MOST) bus, a FlexRay, or an Ethernet, or may be a line formed by a wireless communication module such as wireless fidelity (wireless fidelity, Wi-Fi), Bluetooth, or ZigBee (ZigBee).

In this embodiment of this application, before the control ends such as the domain controller 201 and another peripheral device send the control instruction to the ECU in the vehicle-mounted device 203 through the bus 202, the control ends convert the control instruction transmitted by the bus 202 into a control instruction that can be used and interpreted by each ECU, and perform an operation such as carrying a priority identifier in each control instruction and performing function classification on the control instruction. In this way, when receiving a plurality of control instructions simultaneously or within a specified time period subsequently, the ECU in the vehicle-mounted device 203 selects, based on the priority identifier and the functional category information, a control instruction to be preferentially executed.

The control instruction sent by the control ends such as a physical button or a switch in the vehicle-mounted device 203 through the bus 202 is essentially an electrical signal triggered by a user. A physical button is used as an example. After the physical button sends an electrical signal to the ECU in the vehicle-mounted device 203, the ECU generates a control instruction based on information carried in the electrical signal and a source of the electrical signal, and adds a priority identifier to the control instruction or performs function classification on the control instruction. Therefore, a process of sending the electrical signal by the physical button may be understood as sending the control instruction by the physical button to the ECU in the vehicle-mounted device 203.

The priority identifier may be a random number such as 0, 1, 2, 3, ..., where 0 represents a highest level, 1 represents a second highest level, 2 represents a medium level, and 3 represents a lowest level. Certainly, the priority identifier may alternatively be another identifier that is carried in a data transmission process and that represents an instruction priority. This is not limited in this application.

The functional category information may be classified into a safety category, a comfort category, an entertainment category, and the like based on different levels or types of impact on vehicle functional safety. Generally, in the functional category information, the safety category has the highest importance, the comfort category has the second highest importance, and the entertainment category has the lowest importance. The safety category indicates that the vehicle or the user is safer after the control instruction is executed. The safety category is mainly determined based on an impact on the vehicle driving functional safety, and the safety category has the highest impact on a vehicle driving functional safety level is set to the highest level, such as a control instruction for locking the door, and a control instruction for opening a child lock in a driving process of the vehicle. The comfort category indicates that the user feels comfortable after the control instruction is executed, and the comfort category has the second highest impact on the vehicle driving functional safety level, such as a control instruction for adjusting a seat position, and a control instruction for turning on an air conditioner. The entertainment category indicates that the user is entertained after the control instruction is executed, such as a control instruction for starting playing music, and a control instruction for playing a video, and the entertainment category has the lowest impact on the vehicle driving functional safety level.

Optionally, tables of correspondences under various conditions may be established for status data of the vehicle 100, status data of the sensor, functional category data, and the like, and stored in a memory, an external memory, or another form of memory in advance. In this way, when the domain controller 201 subsequently determines the functional category of the control instruction, the domain controller 201 may directly determine the functional category information of the control instruction based on data such as the status of the vehicle 100 or the status of the sensor by using a query table.

A rule that the domain controller 201 or the ECU in the vehicle-mounted device 203 adds priority identifiers of different levels to the control instruction generally follows that a priority level added to the control instruction sent by the domain controller 201 is highest, a priority level added to the control instruction corresponding to the electrical signal sent by the physical button is the second highest, and a priority level added to the control instruction sent by another control end is the lowest. It may be understood that there may alternatively be another rule for determining a priority of a control instruction. This is not limited in this application.

If the domain controller 201, or the physical button, or another control end simultaneously sends several control instructions simultaneously or within a specified time period, a control instruction to be preferentially executed may be selected from the several control instructions that are simultaneously sent according to a rule that is of the vehicle function safety impact category or the priority level and that is indicated by the functional category information.

For example, when the domain controller 201 simultaneously sends two control instructions "open a vehicle door" and "lock a vehicle door" to an ECU that controls the door, the domain controller 201 detects whether a current speed of the vehicle is zero. If the vehicle speed is not zero, the domain controller 201 determines the "lock a vehicle door" control instruction as a safety category based on functional category classification, and adds "safety category functional category information" to the control instruction, and the safety category has a highest level of functional safety impact on the vehicle. The domain controller 201 classifies the "open a vehicle door" control instruction as other functional category information based on other status information of the vehicle. For example, the domain controller 201 determines that the "open a vehicle door" control instruction is a comfort category, and the comfort category has the second highest functional safety impact level on the vehicle.

The foregoing describes existing functions of the vehicle-mounted device 203 in detail, and details are not described herein again. In this application, the ECU in the vehicle-mounted device 203 further has a processing unit, and the processing unit is alternatively referred to as an arbitration unit. The processing unit is configured to: identify a priority identifier and/or identify functional category information in a control instruction, and select, based on a level of the priority identifier and/or importance of the functional category information, a control instruction to be preferentially executed, and send the control instruction to an execution module.

The processing unit may be a part of the ECU in the vehicle-mounted device 203, or may be an independent processor with a decision arbitration function. This is not limited in this application. In addition, the processing unit may be provided by a supplier when the vehicle-mounted device 203 is delivered by the supplier, or the processing unit may be added when a vehicle manufacturer modifies the vehicle-mounted device 203 sold by a supplier in a process of vehicle integration.

The following describes a process of implementing solutions in this application by using four specific embodiments.

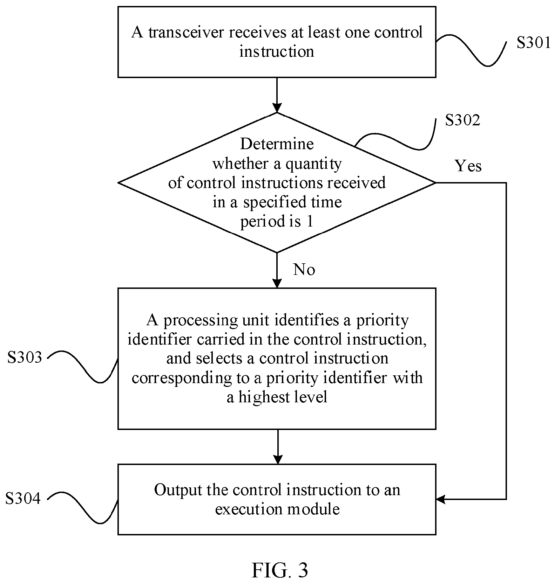

FIG. 3 is a schematic flowchart of a vehicle-mounted device control method according to an embodiment of this application.

An example in which a priority identifier is carried in a control instruction is used. As shown in FIG. 3, the method may be executed by an ECU in a vehicle-mounted device 203. A specific implementation process is as follows:
Step S301: A transceiver receives at least one control instruction.

The control instruction is generated by control ends such as a domain controller 201 and the ECU (triggered by sending an electrical signal through a physical button) in the vehicle-mounted device 203, and is formed after a priority identifier is added. The control instruction is used to control hardware in an execution module to work after being processed by the ECU.

For example, the vehicle-mounted device 203 is a seat. The control instruction includes an adjusted seat number frame bit, an adjusted motor number frame bit, an adjusted switch frame bit, a motor adjustment direction frame bit, and a priority frame bit. The adjusted seat number frame bit carries information about one or more of a driver seat, a front passenger seat, and a rear seat, the adjusted motor number frame bit carries information about one or more motors under a corresponding seat, the adjusted switch frame bit carries information about an enabled state or a disabled state of a corresponding seat and a corresponding motor, the motor adjustment direction frame bit carries information about clockwise or counterclockwise rotation of a corresponding seat and a corresponding motor when the motor is in an enabled state, and the priority frame bit carries a priority identifier, as shown in Table 1.

**Table 1 Example of data semantics of the control instruction of the seat**

| Sequence number | Instruction source | Adjusted seat number | Adjusted motor number | Adjusted switch | Motor rotation direction | Priority |
|---|---|---|---|---|---|---|
| 1 | Domain controller | **0: Driver seat** | 0: Slide rail motor | 0: Disabled | **0: Clockwise** | **0: Highest** |
| | | | | | 1: Counterclockwise | |
| | | 1: Front passenger seat | **1: Headrest motor** | **1: Enabled** | | 1: Second highest |
| | | | | | | 2: Medium |
| | | 2: ... | 2: ... | | | |
| | | | | | | 3: ... |
| 2 | Seat button | **0: Driver seat** | 0: Slide rail motor | 0: Disabled | 0: Clockwise | 0: Highest |
| | | | | | **1: Counterclockwise** | **1: Second highest** |
| | | 1: Front passenger seat | **1: Headrest motor** | **1: Enabled** | | |
| | | | | | | 2: Medium |
| | | | | | | |
| | | 2: ... | 2: ... | | | 3: ... |

Step S302: Determine whether a quantity of control instructions received in a specified time period is 1. If the quantity is not 1, step S303 is performed. If the quantity is 1, step S304 is performed.

The specified time period may a same moment, or may be a very short time period, for example, a time window at a millisecond level. A specific length of the time period depends on design logic or preset information of communication between the vehicle-mounted device 203 and other control ends such as the domain controller 201 and the physical button. This is not specifically limited in this application.

Step S303: A processing unit identifies the priority identifier carried in the control instruction, and selects a control instruction corresponding to a priority identifier with a highest level.

Step S304: Output the control instruction to the execution module.

Specifically, after receiving the control instructions sent by the domain controller 201 and the ECU in the vehicle-mounted device 203, the processing unit obtains priority identifiers in the two control instructions through parsing, identifies levels of two priority identifiers, selects a control instruction corresponding to a priority identifier with a higher level, and sends the control instruction to the execution module. Table 1 is used as an example. Based on the data shown in Table 1, the processing unit finally sends, to the execution module, a control instruction that has a sequence number of "1", that is from the "domain controller", and that has an adjusted seat number of "0: driver seat", an adjusted motor number of "1: headrest motor", an adjusted switch of "1: enabled", and a motor rotation direction of "0: clockwise".

In this embodiment, when the control ends such as the domain controller 201 and the physical button send one or more control instructions to the vehicle-mounted device 203, priority identifiers of different levels are added in a process of generating each control instruction. In this way, after receiving the one or more control instructions, the processing unit preferentially executes, based on a level of a priority identifier carried in each control instruction, a control instruction corresponding to a priority identifier with a highest level. Therefore, when vehicle-mounted device 203 receives, within a specified time period, a plurality of control instructions for controlling same hardware, a case in which the vehicle-mounted device 203 cannot normally execute the control instructions, does not work, or the like is avoided.

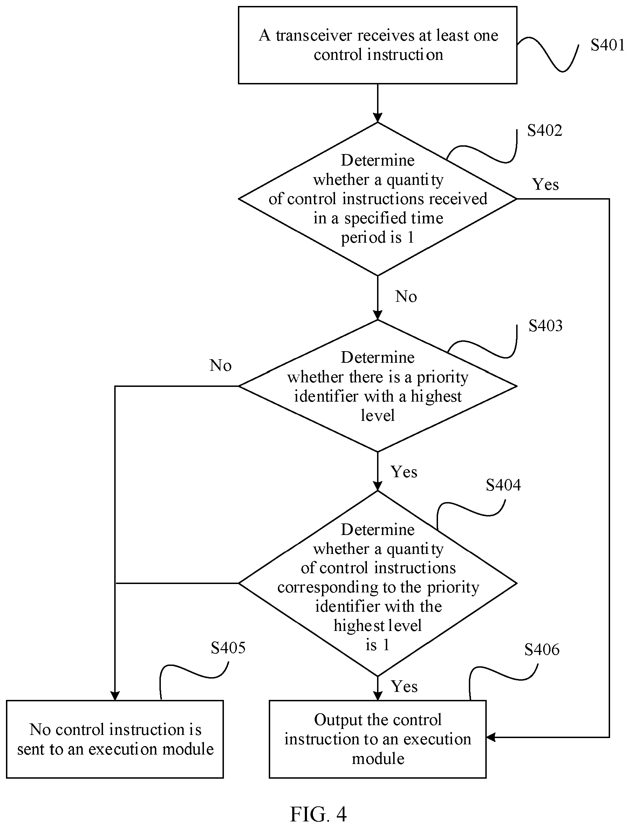

FIG. 4 is a schematic flowchart of a vehicle-mounted device control method according to an embodiment of this application.

An example in which a priority identifier is added in a control instruction is used. As shown in FIG. 4, the method may be executed by an ECU in a vehicle-mounted device 203. A specific implementation process is as follows:
Step S401: A transceiver receives at least one control instruction.

Step S402: Determine whether a quantity of control instructions received in a specified time period is 1. If the quantity is not 1, step S403 is performed. If the quantity is 1, step S406 is performed.

Step S403: A processing unit identifies a priority identifier carried in the control instruction, and determines whether there is a priority identifier. If there is the priority identifier, step S404 is performed. If there is not the priority identifier, step S405 is performed.

Step S404: The processing unit selects a control instruction corresponding to the priority identifier, and determines whether a quantity of control instructions corresponding to the priority identifier with the highest level is 1. If the quantity is not 1, step S405 is performed. If the quantity is 1, step S406 is performed.

Step S405: The processing unit does not send any control instruction to an execution module.

Step S406: The processing unit outputs the control instruction to the execution module.

In the embodiment shown in FIG. 4, all received control instructions carry priority identifiers and each priority identifier has a different level. Compared with the embodiment shown in FIG. 3, in the embodiment shown in FIG. 4, some of the control instructions received by the vehicle-mounted device 203 in the specified time period carry a priority identifier, and some of the control instructions do not carry a priority identifier. Therefore, after the processing unit receives the control instructions, if none of the control instructions carries a priority identifier, the processing unit does not send the control instructions to the execution module. If one control instruction in the control instructions carries a priority identifier with a highest level, and other control instructions do not carry a priority identifier or carry priority identifiers with lower levels, the processing unit outputs, to the execution module, the control instruction that carries the priority identifier.

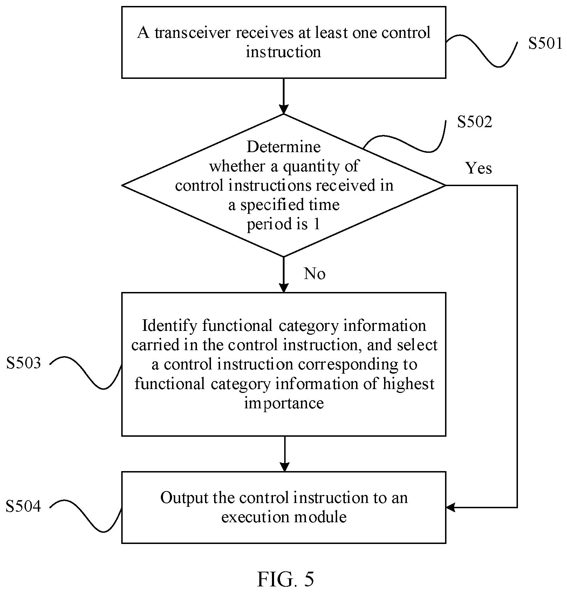

FIG. 5 is a schematic flowchart of a vehicle-mounted device control method according to an embodiment of this application.

An example in which functional category information is added to a control instruction is used. As shown in FIG. 5, the method is executed by an ECU in a vehicle-mounted device 203. A specific implementation process is as follows:
Step S501: A transceiver receives at least one control instruction.

In a process of generating a control instruction by a control end such as a domain controller 201 and the ECU in the vehicle-mounted device 203, based on factors such as a source of the to-be-generated control instruction, controlled hardware corresponding to the control instruction, and a relationship between the control instruction and a current vehicle status, the control end classifies the control instruction based on a functional category, determines that the control instruction belongs to a safety category, or a comfort category, or an entertainment category, or another category, and then adds determined functional category information to the generated control instruction. For different categories, the safety category is more important or prioritized than the comfort category, and the comfort category is more important or prioritized than the entertainment category. The rest may be deduced by analogy.

For example, the vehicle-mounted device 203 is an interior and exterior lighting apparatus of a vehicle, and the control instruction includes a light position number frame bit, an LED light source number frame bit, an adjusted switch frame bit, a light color adjustment frame bit, and a functional category information frame bit. The light position number frame bit carries position information of an adjusted light in a vehicle, the LED light source number frame bit carries information about one or more lights at a corresponding position, the adjusted switch frame bit carries information about a turned-on state or a turned-off state of a corresponding position and a corresponding light, the light color adjustment frame bit carries information about a color of a corresponding position and a corresponding light when the light is in a turned-on state under a control of a control instruction, and the functional category information frame bit carries functional category information, as shown in Table 2.

**Table 2 Example of data semantics of the control instruction of the light**

| Sequence number | Instruction source | Light position number | LED light source number | Adjusted switch | Light color adjustment | Functional category information |
|---|---|---|---|---|---|---|
| 1 | Domain controller | **0: Left front** | **0: Light source 1** | 0: Turned-off | **0: Light color 1 (red)** | **0: Safety** |
| | | | | 1: **Turned-on** | | 1: Comfort |
| | | 1: Right front | 1: Light source 2 | | 1: Light color 2 | |
| | | | | | 2: ... | |
| | | 2: ... | 2: ... | | | |
| 2 | In-vehicle screen | **0: Left front** | **0: Light source 1** | 0: Turned-off | 0: Light color 1 | 0: Safety |
| | | | | **1: Turned-on** | **1: Light color 2 (blue)** | **1: Comfort** |
| | | 1: Right front | 1: Light source 2 | | | |
| | | | | | 2: ... | |
| | | 2: ... | 2: ... | | | |

Step S502: Determine whether a quantity of control instructions received in a specified time period is 1. If the quantity is not 1, step S503 is performed. If the quantity is 1, step S504 is performed.

Step S503: A processing unit identifies functional category information carried in the control instruction, and selects a control instruction corresponding to functional category information of highest importance.

Step S504: Output the control instruction to an execution module.

Specifically, after receiving the control instruction sent by the domain controller 201 and the ECU in the vehicle-mounted device 203, the processing unit obtains functional category information in the two control instructions through parsing. If there is functional category information of the "safety category", the processing unit sends the control instruction corresponding to the functional category information of the "safety category" to the execution module. If there is no functional category information of the "safety category" but functional category information of the "comfort category", the processing unit sends the control instruction corresponding to the functional category information of the "comfort category" to the execution module. The rest may be deduced by analogy.

Table 2 is used as an example. Based on the data shown in Table 2, the processing unit finally sends, to the execution module, the control instruction that has a sequence number of "1", that is from the "domain controller", that has a light position number of "0: Left front", that has an LED light source number of "0: Light source 1", that has an adjusted switch of "1: Turned-on", and that has a light color adjustment of "0: Light color 1 (red)".

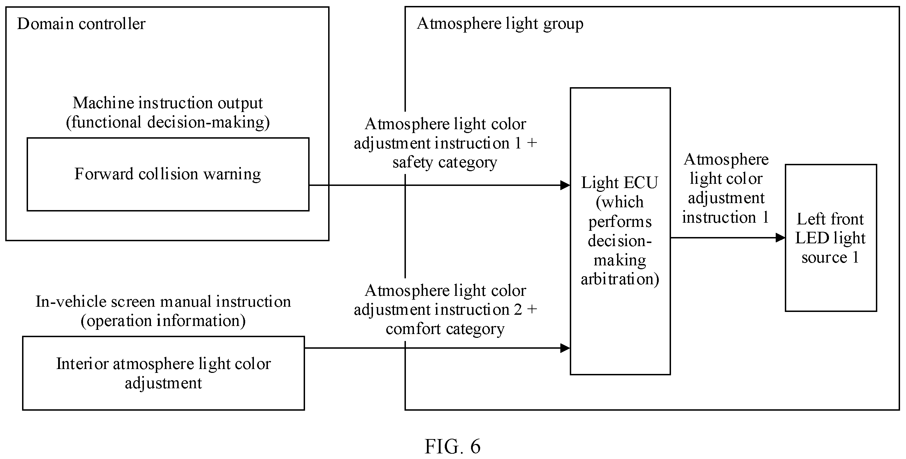

In an application scenario shown in FIG. 6, currently, because many vehicle models have an interior atmosphere light apparatus, an interior atmosphere of the vehicle is rendered by adjusting different dimensions such as light colors and luminance. The interior atmosphere light can also be used as an alarm prompt carrier of an active safety system. For example, when a forward collision warning system of the vehicle identifies a risk of collision with a vehicle in front of the vehicle, the interior atmosphere light (red + flashing) may be used to alert a driver.

If detecting that the vehicle 100 may collide with another vehicle, the domain controller 201 automatically generates a control instruction whose sequence number is "1" in Table 2. At the same time, when the driver does not know that the vehicle is about to collide, the driver still performs an operation on the in-vehicle screen to generate the control instruction whose sequence number is "2" in Table 2. When the vehicle-mounted device 203 receives the two control instructions simultaneously, the processing unit selects the control instruction whose sequence number is "1" in Table 2 and sends the control instruction to the execution module, so that the in-vehicle atmosphere light generates an alarm in a "red + flashing" manner to alert the driver.

In this embodiment, when the control ends such as the domain controller 201 and the in-vehicle screen send one or more control instructions to the vehicle-mounted device 203, function classification is performed on each control instruction, to determine that each control instruction belongs to the safety category, the comfort category, the entertainment category, or the like. After receiving the one or more control instructions, the vehicle-mounted device 203 preferentially executes, based on the functional category information in each control instruction, the control instruction of highest importance according to a rule that the importance or priority of the safety category is higher than that of the comfort category, and the importance or priority of the comfort category is higher than that of the entertainment category. In this way, when the vehicle-mounted device 203 receives a plurality of control instructions, a case in which the vehicle-mounted device 203 cannot normally execute, does not work, or the like is avoided. In addition, compared with the solution in the embodiment shown in FIG. 3 and the solution in the embodiment shown in FIG. 4, in the embodiment shown in FIG. 5, the control instruction to be preferentially executed is selected based on a level of impact on vehicle functional safety, so that safety in a running process of the vehicle is ensured.

For the technical solution protected in the embodiment shown in FIG. 5, in this application, the control instruction generated by the domain controller 201 and the in-vehicle screen side may not carry the priority identifier and the functional category information. After the processing unit receives the plurality of control instructions within the specified time period, the processing unit may detect a vehicle speed, a folding angle of a seat, and the like, and perform function classification on the plurality of received control instructions based on each piece of detected data, to determine a functional category to which each control instruction belongs, and preferentially execute a control instruction that belongs to the safety category.

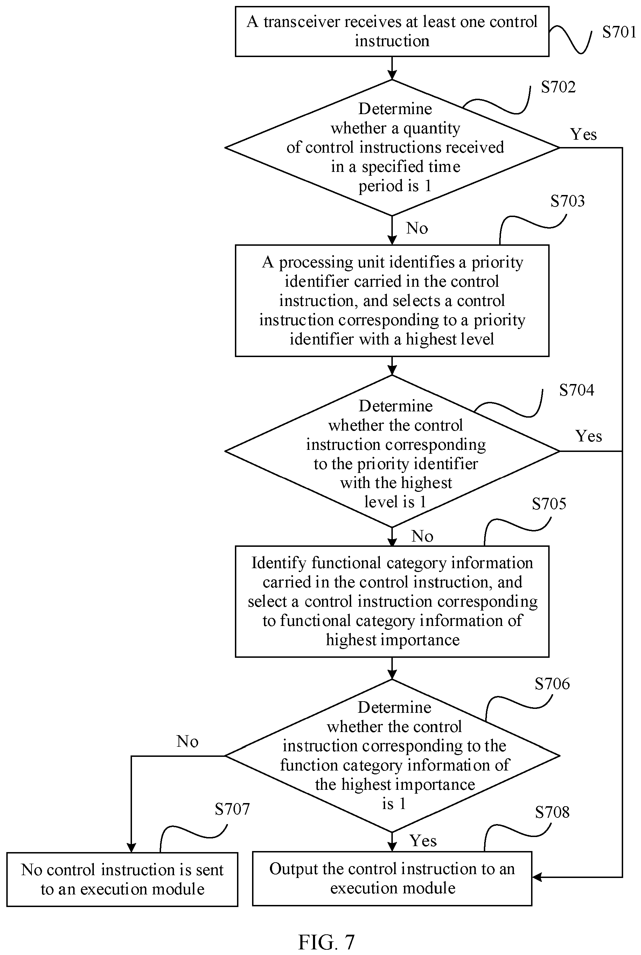

FIG. 7 is a schematic flowchart of a vehicle-mounted device control method according to an embodiment of this application.

An example in which a priority identifier and functional category information are added to a control instruction is used. As shown in FIG. 7, the method is executed by an ECU in a vehicle-mounted device 203. A specific implementation process is as follows:
Step S701: A transceiver receives at least one control instruction.

In this application, the control instruction carries not only the priority identifier, but also the functional category information. For example, the vehicle-mounted device 203 is a window. The control instruction includes an adjusted window number frame bit, an adjusted motor number frame bit, an adjusted switch frame bit, a motor adjustment direction frame bit, a priority frame bit, and a functional category information frame bit. The adjusted window number frame bit carries one or more windows on a driver side, a front passenger side, a rear left side, and a rear right side, the adjusted motor number frame bit carries information about one or more motors under a corresponding window, the adjusted switch frame bit carries information about a enabled state or a turned-off state of a corresponding window and a corresponding motor, the motor adjustment direction frame bit carries information about clockwise or counterclockwise rotation of a corresponding seat and a corresponding motor in an enabled state, the priority frame bit carries a priority identifier, and the functional category information frame bit carries the functional category information, as shown in Table 3.

**Table 3 Example of data semantics of the control instruction of the window**

| Sequence number | Instruction source | Adjusted window number | Adjusted motor number | Adjusted switch | Motor rotation direction | Priority | Functional category information |
|---|---|---|---|---|---|---|---|
| 1 | Domain | **0: Driver side window** | **0: Lifting motor** | 0: Disabled | **0: Clockwise** | **0: Highest** | **0: Safety** |
| | controller | | | | 1: Counterclockwise | | 1: Comfort |
| | | | | **1: Enabled** | | 1: Second highest | |
| | | 1. Front passenger side window | 1: ... | | | | |
| | | | | | | 2: Medium | |
| | | 2: ... | | | | 3: ... | |
| 2 | Door | **0: Driver side window** | **0: Lifting motor** | 0: Disabled | 0: Clockwise | **0: Highest** | 0: Safety |
| | button | | | | **1: Counterclockwise** | | **1: Comfort** |
| | | | | **1: Enabled** | | 1: Second highest | |
| | | 1. Front passenger side window | 1: ... | | | | |
| | | | | | | 2: Medium | |
| | | 2: ... | | | | 3: ... | |

Step S702: Determine whether a quantity of control instructions received in a specified time period is 1. If the quantity is not 1, step S703 is performed. If the quantity is 1, step S708 is performed.

Step S703: A processing unit identifies a priority identifier carried in the control instruction, and selects a control instruction corresponding to a priority identifier with a highest level.

Step S704: The processing unit determines whether the control instruction corresponding to the priority identifier with the highest level is 1. If the quantity is not 1, step S705 is performed. If the quantity is 1, step S708 is performed.

Step S705: The processing unit identifies functional category information carried in the control instruction, and selects a control instruction corresponding to functional category information of highest importance.

Step S706: The processing unit determines whether the control instruction corresponding to the functional category information of the highest importance is 1. If the quantity is not 1, step S707 is performed. If the quantity is 1, step S708 is performed.

Step S707: The processing unit does not send any control instruction to an execution module.

Step S708: The processing unit sends the control instruction to the execution module.

Specifically, because both the priority identifier and the functional category information are carried in the control instruction, a determining process of the processing unit is not limited to first determining based on the priority identifier and then determining based on the functional category information in the foregoing process. Alternatively, the determining process may be first determining based on the functional category identifier, and then determining based on the priority identifier.

It may be understood that, in order to ensure safety of an occupant, in some vehicle-mounted device control methods, a control instruction that affects functional safety of a vehicle is preferentially considered, and a control instruction with a highest level indicated by the functional category identifier is preferentially executed, to ensure the functional safety of the vehicle, and avoid or reduce occurrence of traffic accidents and injuries. In step S703 of the method shown in FIG. 7, when identifying that the functional category identifier carried in the control instruction is the safety category, the processing unit directly outputs the control instruction to the execution module, to ensure functional safety of the vehicle.

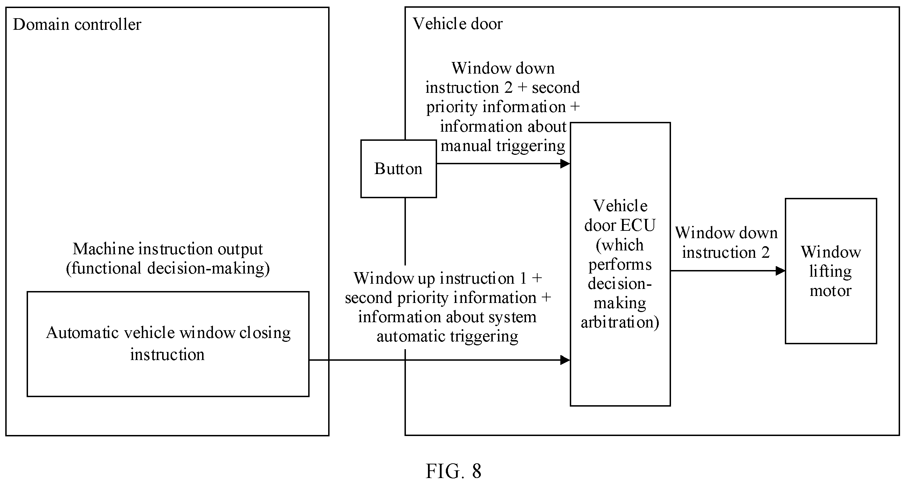

In an application scenario shown in FIG. 8, currently, many vehicle models have a function of automatically closing a window with a vehicle speed. In other words, when a vehicle runs at a specific vehicle speed, if a window is not closed, a system automatically triggers to close the window, to reduce noise inside the vehicle. A DCU that controls a window lifting motor receives a manual instruction (that is, a control instruction whose sequence number is "2" in Table 3) and system automatic triggering instruction (that is, a control instruction whose sequence number is "1" in Table 3) between two moments.

After the vehicle-mounted device 203 receives the two control instructions, if the processing unit preferentially determines the priority identifier and then determines the functional category information, the processing unit may determine, based on the priority identifier, that the control instruction whose sequence number is "2" in Table 3 is preferentially sent to the execution module. If the processing unit preferentially determines the functional category information and then determines the priority identifier, the processing unit may determine, based on the functional category information, that the control instruction whose sequence number is "1" in Table 3 is preferentially sent to the execution module.

In the embodiment shown in FIG. 7, when the control ends such as the domain controller 201 and the physical button send one or more control instructions to the vehicle-mounted device, function classification is performed on each control instruction, to determine that each control instruction belongs to the safety category, the comfort category, the entertainment category, or the like. The one or more control instructions received by the vehicle-mounted device 203 carry both the priority identifier and the functional category information, so that the processing unit considers both a priority issue and a factor that affects vehicle functional safety in a process of determining a control instruction to be preferentially executed, and a finally determined control instruction is a best control instruction to be preferentially executed.

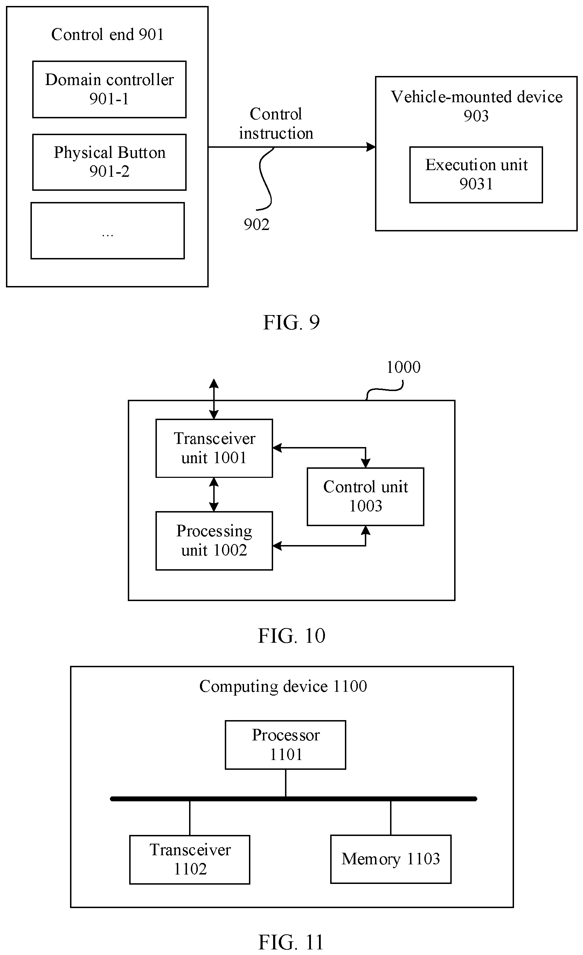

FIG. 9 is a schematic diagram of an architecture of a vehicle-mounted device control system according to an embodiment of this application. A system shown in FIG. 9 includes a control end 901, a communication unit 902, and a vehicle-mounted device 903. The control end 901 is connected to the vehicle-mounted device 903 through the communication unit 902.

The control end 901 is configured to generate at least two control instructions. The at least two control instructions are used to control an execution unit 9031 in the vehicle-mounted device 903. Each control instruction carries a priority identifier and/or functional category information. The communication unit 902 is configured to send the at least two control instructions to the vehicle-mounted device 903. The vehicle-mounted device 903 is configured to: after receiving the at least two control instructions within a specified time period, select one control instruction according to a rule of a level of the priority identifier and/or importance of the functional category information, and execute the control instruction by using the execution unit 9031. For a process of implementing vehicle-mounted device control by the vehicle-mounted device 903, refer to FIG. 1 to FIG. 8 and the foregoing content described above. Details are not described herein again in this application.

FIG. 10 is a schematic diagram of an architecture of a vehicle-mounted device control apparatus according to an embodiment of this application. An apparatus 1000 shown in FIG. 10 includes a transceiver unit 1001, a processing unit 1002, and a control unit 1003. An execution process is as follows:
The transceiver unit 1001 is configured to receive at least two control instructions at a same moment or in a first time period. The processing unit 1002 is configured to determine a priority identifier and/or functional category information of each of the at least two control instructions, where the at least two control instructions are used to control a same execution unit in a vehicle-mounted device. The control unit 1003 is configured to control the execution unit based on the priority identifier and/or the functional category information of each control instruction.

In an example, the processing unit 1002 is specifically configured to: when each control instruction carries the priority identifier information and a quantity of control instructions with a highest priority is 1, control the execution unit based on the control instruction with the highest priority.

In an example, the processing unit 1002 is specifically configured to: when each control instruction carries the functional category information, control the execution unit according to a first preset rule.

In an example, the first preset rule includes: determining a priority of the control instruction based on a vehicle function safety impact category indicated by the functional category information.

In an example, the control unit 1003 is specifically configured to: when each control instruction carries both the priority identifier and the functional category information, control the execution unit according to a second preset rule.

In an example, the second preset rule includes: determining a to-be-executed control instruction based on a level indicated by the priority identifier and the first preset rule.

In an example, when one or more of the at least two control instructions do not carry the functional category information, the processing unit 1002 is specifically configured to: determine functional category information of the one or more control instructions according to a third preset rule.

In an example, the processing unit 1002 is specifically configured to: determine the functional category information of the one or more control instructions based on a preset correspondence between a control instruction and functional category information.

FIG. 11 is a schematic diagram of an architecture of a computing device according to an embodiment of this application. As shown in FIG. 11, the computing device 1100 includes a processor 1101 and a memory 1103.

The processor 1101 may be a general-purpose processor or a dedicated processor. For example, the processor 1101 may include a central processing unit (central processing unit, CPU) and/or a baseband processor. For example, the processor 1101 may determine a control instruction based on a priority identifier and/or functional category information carried in each control instruction. For a specific implementation process, refer to FIG. 1 to FIG. 8 and the technical solutions described above.

The memory 1103 may store a program (or may be instructions or code), and the program may be run by the processor 1101, so that the processor 1101 performs the method described in this solution. Optionally, the memory 1103 may further store data. For example, the processor 1101 may read data stored in the memory 1103. The data and the program may be stored at a same storage address, or the data and the program may be stored at different storage addresses. In this solution, the processor 1101 and the memory 1103 may be separately disposed, or may be integrated together, for example, integrated on a board or a system on chip (system on chip, SOC).

Optionally, the computing device 1100 may further include a transceiver 1102. The transceiver 1102 may implement signal input (receiving) and output (sending). For example, the transceiver 1102 may include a transceiver or a radio frequency chip. The transceiver 1102 may further include a communication interface. For example, the device 1100 may receive, through the transceiver 1102, a control instruction sent by a device such as a domain controller, an in-vehicle central vehicle controller, and an in-vehicle screen. Alternatively, the device 1100 may send, through the transceiver 1102, a selected control instruction to an execution unit, such as a motor or a heater.

It can be understood that the structure illustrated in this embodiment of this application does not constitute a specific limitation on the device 1100. In some other embodiments of this application, the device 1100 may include more or fewer components than those shown in the figure, or some components may be combined, or some components may be split, or there may be a different component layout. The components shown in the figure may be implemented by using hardware, software, or a combination of software and hardware.

The present invention provides a computer-readable storage medium. The computer-readable storage medium stores a computer program. When the computer program is executed in a computer, the computer is enabled to perform any one of the methods described in FIG. 1 to FIG. 8 and corresponding descriptions.

The present invention provides a computer program product, where the computer program product stores instructions, and when the instructions are executed by a computer, the computer is enabled to perform any one of the methods described in FIG. 1 to FIG. 8 and corresponding descriptions.

In the foregoing embodiment, the vehicle-mounted device control system in FIG. 9 and the vehicle-mounted device control apparatus 1000 in FIG. 10 may be completely or partially implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

## Claims

1. A vehicle-mounted device (203) control method, comprising:
receiving, by an electronic control unit, at least two control instructions at a same moment or in a first time period,
wherein the at least two control instructions carry both a priority identifier and functional category information and wherein the control instructions are used to control a same execution unit (9031) in a vehicle-mounted device (203); and
determining, by the electronic control unit, a to-be-executed control instruction based on a level indicated by the priority identifier and a vehicle function safety impact category indicated by the functional category information;
controlling the execution unit (9031) according to the to-be-executed control instruction.

2. The method according to claim 1, wherein the controlling the execution unit (9031) based on the priority identifier and the functional category information of each control instruction comprises:
when each control instruction carries the priority identifier and a quantity of control instructions with a highest priority is 1, controlling the execution unit (9031) based on the control instruction with the highest priority.

3. A vehicle-mounted device control apparatus, wherein the apparatus is configured to perform the method according to any one of claims 1 to 2.

4. A vehicle-mounted device control system, comprising at least one transmit end and a control end, wherein the control end is configured to perform the method according to any one of claims 1 to 2.

5. A vehicle-mounted device control system, comprising a domain controller and a vehicle-mounted device, wherein the vehicle-mounted device is configured to perform the method according to any one of claims 1 to 2.

6. A vehicle, comprising the vehicle-mounted device control apparatus according to claim 3.

7. A computing device, comprising a memory and a processor, wherein the memory is configured to store instructions, and the processor is configured to invoke the instructions stored in the memory, to perform the method according to any one of claims 1 to 2.

8. A computer-readable storage medium, wherein the computer-readable storage medium stores a computer program, and when the computer program is executed on a computer, the computer is enabled to perform the method according to any one of claims 1 to 2.

## Patentansprüche

1. Steuerverfahren für eine fahrzeugmontierte Vorrichtung (203), umfassend:
Empfangen, durch eine elektronische Steuereinheit, von mindestens zwei Steueranweisungen zu einem gleichen Zeitpunkt oder innerhalb eines ersten Zeitraums,
wobei die mindestens zwei Steueranweisungen sowohl eine Prioritätskennung als auch eine Funktionskategorieinformation tragen und wobei die Steueranweisungen verwendet werden, um eine gleiche Ausführungseinheit (9031) in einer fahrzeugmontierten Vorrichtung (203) zu steuern; und
Bestimmen, durch die elektronische Steuereinheit, einer auszuführenden Steueranweisung auf der Grundlage einer durch die Prioritätskennung angegebenen Ebene und einer durch die Funktionskategorieinformation angegebenen Kategorie der Sicherheitsauswirkungen auf die Fahrzeugfunktion;
Steuern der Ausführungseinheit (9031) entsprechend der auszuführenden Steueranweisung.

2. Verfahren nach Anspruch 1, wobei das Steuern der Ausführungseinheit (9031) auf der Grundlage der Prioritätskennung und der Funktionskategorieinformation jeder Steueranweisung Folgendes umfasst:
wenn jede Steueranweisung die Prioritätskennung trägt und eine Anzahl von Steueranweisungen mit einer höchsten Priorität 1 ist, Steuern der Ausführungseinheit (9031) auf der Grundlage der Steueranweisung mit der höchsten Priorität.

3. Steuervorrichtung für eine fahrzeugmontierte Vorrichtung, wobei die Vorrichtung dafür ausgelegt ist, das Verfahren nach einem der Ansprüche 1 bis 2 durchzuführen.

4. Steuersystem für eine fahrzeugmontierte Vorrichtung, umfassend mindestens eine Sendeseite und ein Steuerungsseite, wobei die Steuerungsseite dafür ausgelegt ist, das Verfahren nach einem der Ansprüche 1 bis 2 durchzuführen.

5. Steuersystem für eine fahrzeugmontierte Vorrichtung, umfassend eine Domänensteuerung und eine fahrzeugmontierte Vorrichtung, wobei die fahrzeugmontierte Vorrichtung dafür ausgelegt ist, das Verfahren nach einem der Ansprüche 1 bis 2 durchzuführen.

6. Fahrzeug, umfassend die Steuervorrichtung für eine fahrzeugmontierte Vorrichtung nach Anspruch 3.

7. Computervorrichtung, umfassend einen Speicher und einen Prozessor, wobei der Speicher dafür ausgelegt ist, Anweisungen zu speichern, und der Prozessor dafür ausgelegt ist, die im Speicher gespeicherten Anweisungen zum Durchführen des Verfahrens nach einem der Ansprüche 1 bis 2 aufzurufen.

8. Computerlesbares Speichermedium, wobei das computerlesbare Speichermedium ein Computerprogramm speichert und, wenn das Computerprogramm auf einem Computer ausgeführt wird, der Computer in die Lage versetzt wird, das Verfahren nach einem der Ansprüche 1 bis 2 durchzuführen.

## Revendications

1. Procédé de commande de dispositif embarqué (203), comprenant :
la réception, par une unité de commande électronique, d'au moins deux instructions de commande à un même moment ou dans un premier intervalle de temps,
dans lequel les au moins deux instructions de commande portent à la fois un identifiant de priorité et des informations de catégorie fonctionnelles et dans lequel les instructions de commande sont utilisées pour commander une même unité d'exécution (9031) dans un dispositif embarqué (203) ; et
la détermination, par l'unité de commande électronique, d'une instruction de commande devant être exécutée sur la base d'un niveau indiqué par l'identifiant de priorité et d'une catégorie d'impact de sécurité de fonction de véhicule indiquée par les informations de catégorie fonctionnelles ;
la commande de l'unité d'exécution (9031) en fonction de l'instruction de commande devant être exécutée.

2. Procédé selon la revendication 1, dans lequel la commande de l'unité d'exécution (9031) sur la base de l'identifiant de priorité et des informations de catégorie fonctionnelles de chaque instruction de commande comprend :
lorsque chaque instruction de commande porte l'identifiant de priorité et une quantité d'instructions de commande avec la priorité la plus élevée est égale à 1, le fait de commander l'unité d'exécution (9031) sur la base de l'instruction de commande avec la priorité la plus élevée.

3. Appareil de commande de dispositif embarqué, l'appareil étant configuré pour réaliser le procédé selon n'importe laquelle des revendications 1 à 2.

4. Système de commande de dispositif embarqué, comprenant au moins un côté émission et un côté commande, le côté commande étant configuré pour réaliser le procédé selon n'importe laquelle des revendications 1 à 2.

5. Système de commande de dispositif embarqué, comprenant un contrôleur de domaine et un dispositif embarqué, le dispositif embarqué étant configuré pour réaliser le procédé selon n'importe laquelle des revendications 1 à 2.

6. Véhicule, comprenant l'appareil de commande de dispositif embarqué selon la revendication 3.

7. Dispositif informatique, comprenant une mémoire et un processeur, dans lequel la mémoire est configurée pour stocker des instructions, et le processeur est configuré pour solliciter les instructions stockées dans la mémoire, afin de réaliser le procédé selon n'importe laquelle des revendications 1 à 2.

8. Support de stockage lisible par ordinateur, le support de stockage lisible par ordinateur stockant un programme informatique, et lorsque le programme informatique est exécuté sur un ordinateur, l'ordinateur étant habilité à réaliser le procédé selon n'importe laquelle des revendications 1 à 2.
